# EUROPEAN PATENT SPECIFICATION

(11) **EP 4 132 199 B1**
(45) Date of publication and mention of the grant of the patent: **12.08.2026**
(21) Application number: 22169849.1
(22) Date of filing: 25.04.2022
(51) Int. Cl.: H04W 76/14, H04W 28/02, H04W 40/22, H04W 88/04, H04W 92/18, H04W 76/30, H04W 76/23, H04W 76/19

(54) **MANAGING RELAYING SERVICES UNDER CONGESTION CONTROL**
VERWALTUNG VON RELAYING-DIENSTEN UNTER ÜBERLASTSTEUERUNG
GESTION DES SERVICES DE RELAIS SOUS CONTRÔLE DE CONGESTION

(30) Priority: 06.08.2021 US 202163230278 P
(43) Date of publication of application: 08.02.2023
(73) Proprietor: Nokia Technologies Oy, 02610 Espoo (FI)
(72) Inventor: NASSAR, Mohamed Amin, 81477 Munich (DE)
(74) Representative: Samson & Partner Patentanwälte mbB

(56) References cited:
- EP-A1- 4 033 799
- WO-A1-2020/168065
- WO-A1-2021/237058
- WO-A2-2016/073984
- US-A1- 2019 394 816
- "3rd Generation Partnership Project; Technical Specification Group Services and System Aspects; Study on system enhancement for Proximity based Services (ProSe) in the 5G System (5GS) (Release 17)", vol. SA WG2, no. V2.0.0, 16 March 2021 (2021-03-16), pages 1 - 183, XP052000031, Retrieved from the Internet <URL:https://ftp.3gpp.org/Specs/archive/23_series/23.752/23752-200.zip 23752-200.docx> [retrieved on 20210316]

## Description

### Field

The present disclosure relates to a first and a second user equipment and the corresponding methods and computer-readable storage media.

### Background

A communication system can be seen as a facility that enables communication sessions between two or more entities such as user terminals, access nodes and/or other nodes by providing carriers between the various entities involved in the communications path. A communication system can be provided for example by means of a communication network and one or more compatible communication devices. The communication sessions may comprise, for example, communication of data for carrying communications such as voice, electronic mail (email), text message, multimedia and/or content data and so on. Content may be multicast or uni-cast to communication devices.

A user can access the communication system by means of an appropriate communication device or terminal. A communication device of a user is often referred to as user equipment (UE) or user device. The communication device may access a carrier provided by an access node and transmit and/or receive communications on the carrier.

The communication system and associated devices typically operate in accordance with a required standard or specification which sets out what the various entities associated with the system are permitted to do and how that should be achieved. Communication protocols and/or parameters which shall be used for the connection are also typically defined. One example of a communications system is UTRAN (3G radio). Another example of an architecture that is known is the long-term evolution (LTE) or the Universal Mobile Telecommunications System (UMTS) radio-access technology. Another example communication system is so called 5G system that allows user equipment (UE) or user device to contact a 5G core via e.g. new radio (NR) access technology or via other access technology such as Untrusted access to 5GC or wireline access technology.

US 2019/394816 A1 discloses a method and apparatus for transmitting and receiving data of a remote UE via a relay UE in a wireless communication system, in which a base station establishes and manages radio data bearers (DRBs) for the relay UE and the remote UE (including additional DRBs when needed), and may signal bearer-related reject causes and backoff timers to the relay UE for forwarding to the remote UE.

### Summary

According to a first aspect, the present application provides a first user equipment as defined by the subject-matter of independent claim 1, a corresponding method as defined by independent claim 6 and a corresponding computer-readable storage medium as defined by independent claim 11.

According to a second aspect, the present application provides a second user equipment as defined by independent claim 12, a corresponding method as defined by independent claim 15 and a corresponding computer-readable storage medium as defined by independent claim 17.

### Brief description of Figures

Examples will now be described, by way of example only, with reference to the accompanying Figures in which:
Figures 1A and 1B show a schematic representation of a 5G system;
Figure 2 shows a schematic representation of a network apparatus;
Figure 3 shows a schematic representation of a user equipment;
Figure 4 shows a schematic representation of a non-volatile memory medium storing instructions which when executed by a processor allow a processor to perform one or more of the steps of the methods of some examples;
Figure 5 shows a schematic representation of a network;
Figure 6 shows signalling between different entities;
Figures 7 to 8 illustrate example signalling between different entities; and
Figures 9 to 11 are example flow charts illustrating operations performed by, respectively, and analytics producer and an analytics consumer.

### Detailed description

In the following, certain aspects are explained with reference to mobile communication devices capable of communication via a wireless cellular system and mobile communication systems serving such mobile communication devices. For brevity and clarity, the following describes such aspects with reference to a 5G wireless communication system.

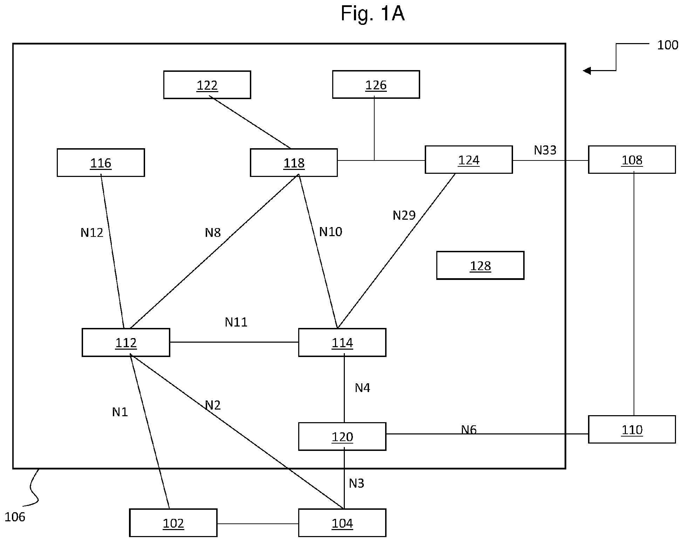

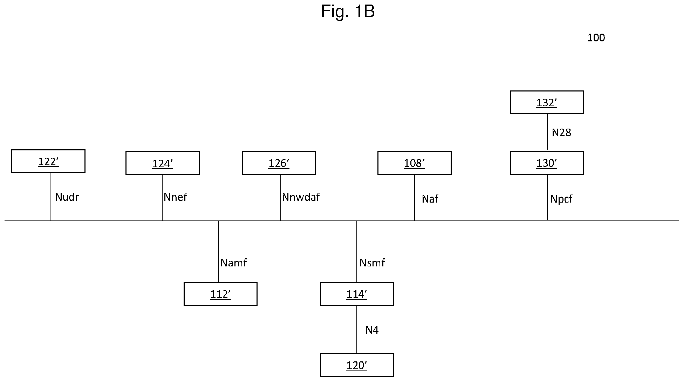

Before explaining in detail the exemplifying embodiments, certain general principles of a 5G wireless communication system are briefly explained with reference to Figures 1A and 1B.

Figure 1A shows a schematic representation of a 5G system (5GS) 100. The 5GS may comprise a user equipment (UE) 102 (which may also be referred to as a communication device or a terminal), a 5G access network (AN) (which may be a 5G Radio Access Network (RAN) or any other type of 5G AN such as a Non-3GPP Interworking Function (N3IWF) /a Trusted Non3GPP Gateway Function (TNGF) for Untrusted / Trusted Non-3GPP access or Wireline Access Gateway Function (W-AGF) for Wireline access) 104, a 5G core (5GC) 106, one or more application functions (AF) 108 and one or more data networks (DN) 110.

The 5G RAN may comprise one or more gNodeB (gNB) distributed unit functions connected to one or more gNodeB (gNB) unit functions. The RAN may comprise one or more access nodes.

The 5GC 106 may comprise one or more Access and Mobility Management Functions (AMF) 112, one or more Session Management Functions (SMF) 114, one or more authentication server functions (AUSF) 116, one or more unified data management (UDM) functions 118, one or more user plane functions (UPF) 120, one or more unified data repository (UDR) functions 122, one or more network repository functions (NRF) 128, and/or one or more network exposure functions (NEF) 124. Although NRF 128 is not depicted with its interfaces, it is understood that this is for clarity reasons and that NRF 128 may have a plurality of interfaces with other network functions.

The 5GC 106 also comprises a network data analytics function (NWDAF) 126. The NWDAF is responsible for providing network analytics information upon request from one or more network functions or apparatus within the network. Network functions can also subscribe to the NWDAF 126 to receive information therefrom. Accordingly, the NWDAF 126 is also configured to receive and store network information from one or more network functions or apparatus within the network. The data collection by the NWDAF 126 may be performed based on at least one subscription to the events provided by the at least one network function.

Figure 1B shows a schematic representation of a 5GC 106' represented in current 3GPP specifications.

Figure 1B shows a UPF 120' connected to an SMF 114' over an N4 interface. The SMF 114' is connected to each of a UDR 122', an NEF 124', an NWDAF 126', an AF 108', a Policy Control Function (PCF) 130', and an AMF 112' over an interconnect medium that also connects these network functions to each other. The PCF 130' is connected to an online charging system (OCS) 132' over an N28 interface.

3GPP refers to a group of organizations that develop and release different standardized communication protocols. 3GPP is currently developing and publishing documents related to Release 16, relating to 5G technology, with Release 17 currently being scheduled for 2022.

First introduced in Release 12 of the 3GPP specifications, ProSe (Proximity Services) is a Device-to-Device technology that allows LTE devices to detect each other and to communicate directly. It utilizes a "sidelink" air interface for direct connectivity between devices. Throughout the following, a UE that connects to a network through another UE will be referred to as a "remote" UE, while the another UE will be referred to as a "relay UE".

In comparison to existing D2D and proximity networking technologies, ProSe offers several distinct benefits including but not limited to better scalability, manageability, privacy, security and battery-efficiency.

5G proximity services has been introduced for Release 17, with 3GPP Technical Specifications 23.304 and 24.554 providing support for these services. Of these Technical Specifications, 3GPP TS 23.304 introduced non-access stratum (NAS) level congestion control for 5G ProSe UE-to-Network Relay, which relates to a UE, such as a relay UE, being refused admittance to a network when the network is too congested/busy.

NAS is a functional layer in the UMTS, LTE and 5G wireless telecom protocol stacks between the core network and user equipment. This layer is used to manage the establishment of communication sessions and for maintaining continuous communications with the user equipment as it moves. The NAS is defined in contrast to the Access Stratum which is responsible for carrying information over the wireless portion of the network. A primary distinction is that the Access Stratum is for dialogue explicitly between a UE and the radio network and the NAS is for dialogue between the UE and core network nodes.

Under current specifications, for both 5G proximity services Layer-2 UE-to-Network Relays and Layer-3 UE-to-Network Relays, when NAS Mobility Management congestion control as specified in clause 5.19.7.2 of TS 23.501 is activated, the UE-to-Network Relay (i.e. the relay UE) is not able to serve the remote UE after the relay UE enters an idle state (e.g. CM_IDLE state). NAS Mobility Management congestion control is considered as activated under clause 5.19.7.2 of TS 23.501 when the relay UE receives a Mobility Management back-off timer from the AMF. This timer will simply be referred to as a "back-off timer" hereunder. The timer is labelled T3346 in current 3GPP specifications.

When the relay UE is running the back-off timer when the UE enters an idle state (e.g. CM_IDLE state), the relay UE releases the direct (i.e. the D2D) communications interface (i.e. a PC5 connection under current terminology) with its 5G proximity services remote UEs. This means that a remote UE will (re)select another 5G proximity services relay UE. The relay UE also does not accept any direct connections for relaying until the back-off timer expires if the 5G proximity services relay UE is in CM_IDLE state.

A remote UE may also be subject to NAS level congestion control as specified in 3GPP TS 23.501.

As specified above in 3GPP TS 23.304 clause 5.12, the 5G proximity services UE-to-Network Relay UE (herein labelled as Relay_UE_1) may need to either reject the 5G proximity services PC5 direct link establishment request back to the remote UE, and/or request to release the PC5 direct link from the remote UE when the NAS level mobility management congestion control is activated at the Relay_UE_1, i.e. as long as the mobility management back-off timer T3346 is running at the Relay_UE_1.

However, it is not clear how and when the remote UE can request again to Establish the PC5 connection with that specific relay UE (Relay_UE_1).

In particular, the remote UE will need to Discover another relay UE (Relay_UE_2) to be able to resume its services instead of the Relay_UE_1. There are several problems associated with this.

For example, the Relay_UE_1 maybe the best UE to serve the remote UE due to its near proximity to the remote UE or due to having the best signal strength.

Further, there may be no other UE in proximity to the remote UE except Relay_UE_1.

Further, the remote UE may retry to re-establish the direct link connection with Relay_UE_1 after some random time and again gets rejected from Relay_UE_1 as the timer (e.g. T3346) is still running at Relay_UE_1.

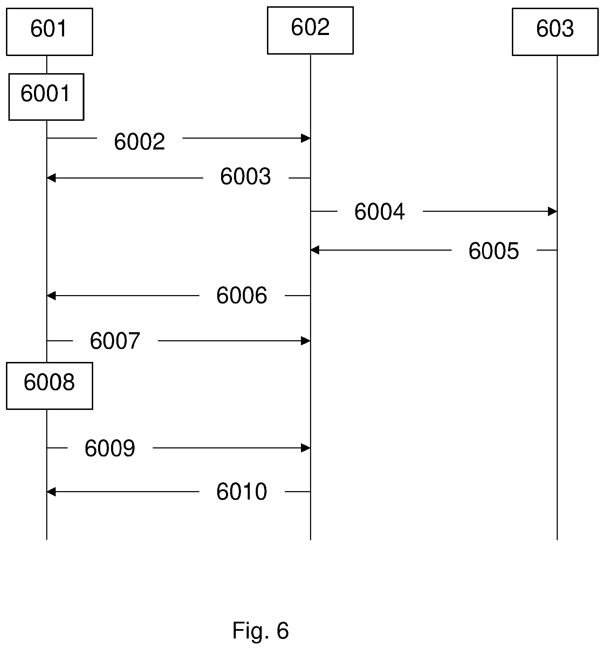

This is illustrated with respect to Figure 6.

Figure 6 illustrates signalling between a remote UE 601, a relay UE 602 (e.g. Relay_UE_1) and an AMF 603.

At 6001, the remote UE 601 discovers the relay UE 602 is available for relaying services over a direct (e.g. PC5) interface.

At 6002, the remote UE 601 sends an establishment request to the relay UE 602. The establishing request may be a request to establish a direct link between the remote UE 601 and the relay UE 602.

At 6003, the relay UE 602 signals an accept message to the remote UE 601 in response to the establishment request of 6002.

Steps 6004 to 6005 relate to establishing NAS level mobility congestion control.

At 6004, the relay UE 602 sends a service request to the AMF 603.

At 6005, the AMF 603 responds to the service request of 6004 with a rejection message. This rejection may comprise a rejection cause (i.e. that the link is congested) and a back-off timer (e.g. T3346). The value of the back-off timer is generated randomly.

In response to this rejection, the relay UE 602 starts the back-off timer. Also, in response to this rejection, at 6006 the relay UE 602 signals the remote UE 601 with a direct link release request. This release request may indicate that the relay UE 601 is temporarily unavailable.

At 6007, the remote UE 601 signals the relay UE 602 to indicate that the release request of 6006 has been accepted.

At 6008, the remote UE 601 is unaware of whether it can request to establish a direct connection with the same relay UE 602, so it attempts again after a random time at 6009.

Therefore, at 6009, the remote UE 601 signals a direct link establishment request to the relay UE 602. However, when the relay UE 602 receives this request, the backoff timer (e.g. T3346) is still running.

Consequently, at 6010, the relay UE 602 responds to the establishment request of 6010 with a rejection message. This rejection may include an indication that the establishment request has been rejected because the relay UE is temporarily unavailable.

To address at least one of the above-mentioned problems, the following discloses a mechanism for minimizing the likelihood of a remote UE attempting to connect to a relay UE when it is unlikely that the relay UE may provide a relaying service. This results in a remote UE obtaining a better quality of service and further results in avoiding degrading a user's experience.

One mechanism for assisting the remote UE to connect to the relay UE is to configure the relay UE to stop announcing itself as "available for relaying" during the lifetime of the back-off timer. For example, using 3GPP terminology and signalling labels, the relay UE may stop sending PROSE PC5 DISCOVERY during the lifetime of the T3346 timer. Although this mechanism is beneficial in that it reduces the amount of signalling that may be exchanged and hence saves transmission and processing resources, this mechanism also results in making the remote UE unaware of the existence of that Relay UE, which may lead to the remote UE attempting to connect to another relay UE, which may be worse in signal strength and not the best one for relaying.

To address this, the following proposes instead to provide the remote UE with an indication that the relay UE is only temporarily unavailable along with a value for the back-off timer (e.g. timer T3346), or an indication thereof. This means that the remote UE can know how long it can wait before re-establishing the connection with the same relay UE (i.e. for T3346 time period to expire), instead of trying at a random time.

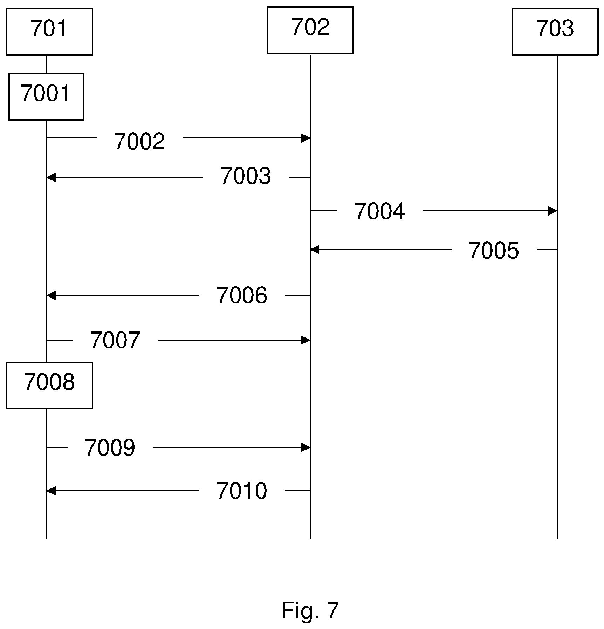

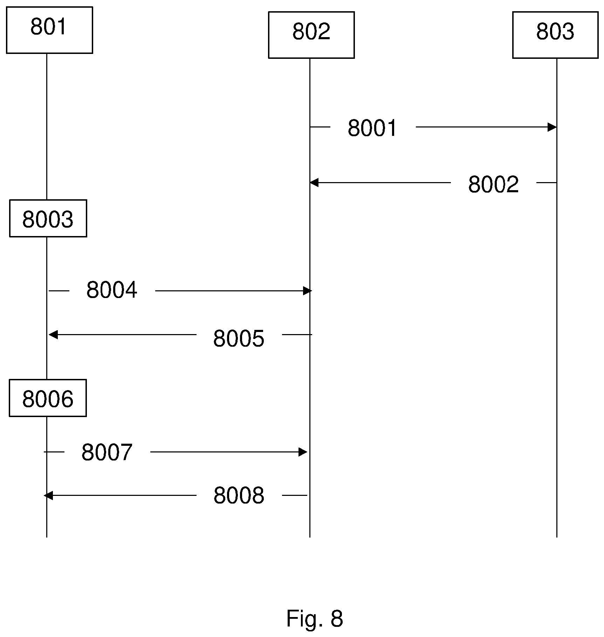

Figures 7 and 8 illustrate different ways this may be achieved.

The first example, presented for illustration purposes only, is illustrated with respect to Figure 7.

Figure 7 illustrates signalling between a remote UE 701, a relay UE 702 (e.g. Relay_UE_1) and an AMF 703.

At 7001, the remote UE 701 discovers the relay UE 702 is available for relaying services over a direct (e.g. PC5) interface.

At 7002, the remote UE 701 sends an establishment request to the relay UE 702. The establishing request may be a request to establish a direct link between the remote UE 701 and the relay UE 702.

At 7003, the relay UE 702 signals an accept message to the remote UE 701 in response to the establishment request of 7002.

Steps 7004 to 7005 relate to establishing NAS level mobility congestion control.

At 7004, the relay UE 702 sends a service request to the AMF 703.

At 7005, the AMF 703 responds to the service request of 7004 with a rejection message. This rejection may comprise a rejection cause (i.e. that the link is congested) and a back-off timer (e.g. T3346). The value of the back-off timer is generated randomly.

In response to this rejection, the relay UE 702 starts the back-off timer. Also, in response to this rejection, at 7006 the relay UE 702 signals the remote UE 701 with a direct link release request. This release request may indicate that the relay UE 701 is temporarily unavailable. In contrast to 6006, the direct link release request of 7006 additionally comprises an indication of the value of the back-off timer (e.g. a value of T3346).

At 7007, the remote UE 701 signals the relay UE 702 to indicate that the release request of 7006 has been accepted.

At 7008, the remote UE 701 waits until the back-off timer has expired.

Therefore, at 7009, the remote UE 701 signals a direct link establishment request to the relay UE 702. When the relay UE 702 receives this request, the backoff timer (e.g. T3346) has expired.

Consequently, at 7010, the relay UE 702 responds to the establishment request of 7010 with an acceptance message, indicating that a direct link between the remote UE 701 and the relay UE 702 has been established.

Therefore, in the example of Figure 7, the 5G proximity services UE-to-Network Relay UE provides the remote UE with the value of the mobility management back-off timer T3346 that 5G proximity services UE-to-Network Relay UE has received from the network.

Although the timer value is shown in Figure 7 as being provided as part of the direct link release request message, it is understood that this timer value may be provided as part of other signalling from the relay UE 702 to the remote UE 701. For example, according to the invention, the timer value is provided as part of a direct link establishment request rejection (e.g. if the signalling of 7003 and/or 7010 is a rejection instead of an acceptance). One of these examples is illustrated below in relation to Figure 8

Figure 8 illustrates example signalling between a remote UE 801, a relay UE 802 and an AMF 803.

Steps 8001 and 8002 relate to establishing NAS level mobility congestion control.

At 8001, the relay UE 802 sends a service request to the AMF 803.

At 8002, the AMF 803 responds to the service request of 8001 with a rejection message. This rejection may comprise a rejection cause (i.e. that the link is congested) and a back-off timer (e.g. T3346). The value of the back-off timer is generated randomly. On receipt of this rejection, the relay UE 802 starts the back-off timer (e.g. T3346).

At 8003, the remote UE 801 discovers the relay UE 802 is available for relaying services over a direct (e.g. PC5) interface.

At 8004, the remote UE 801 signals a direct link establishment request to the relay UE 802.

At 8005, the relay UE 802 signals a direct link establishment rejection. This rejection message indicates that the UE is not currently available. This rejection message additionally comprises an indication of either the complete value of the back-off timer (e.g. timer T3346) or the remaining time till back off timer expiry. Signalling the remaining time here may provide a better granularity/accuracy of when the remote UE can retry establishing the connection with the relay UE.

At 8006, the remote UE 801 waits until the provided timer expires before moving onto step 8007.

At 8007, the back-off timer has expired so the remote UE 801 signals a direct link establishment request to the relay UE 802.

At 8008, in response to the signalling of 8007 and the expiration of the back-off timer, the relay UE 802 signals a direct link establishment accept message.

Using terminology currently in 3GPP specifications, the 5G proximity services UE-to-Network Relay UE can provide the value of the T3346 timer or its remaining value to the remote UE in the PROSE DIRECT LINK ESTABLISHMENT REJECT message and/or in the PROSE DIRECT LINK RELEASE REQUEST message. Providing this timer value will enable the remote UE to know how much time it has to wait before re-requesting to establish a PC5 direct line connection with the 5G proximity services UE-to-Network Relay UE.

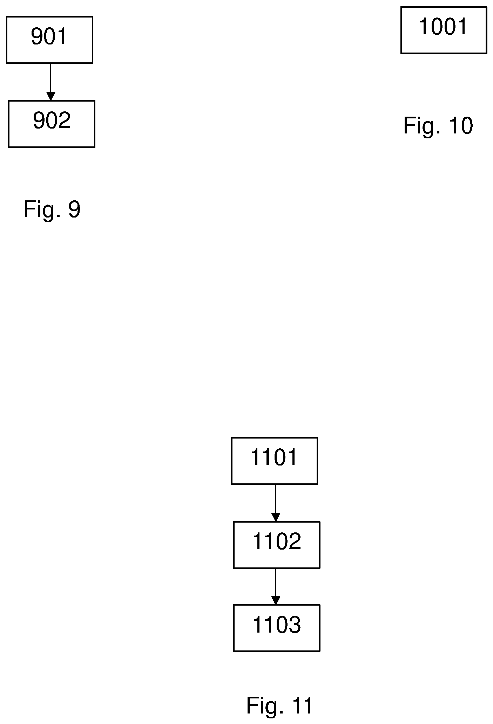

Figures 9 to 11 are flow charts illustrating aspects of the above examples.

Figure 9 illustrates potential operations of an apparatus of a first user equipment. The first user equipment may be, for example, a relay UE. It is understood that although the following highlights certain features, that features described above in relation to the relay UE of Figures 7 and 8 may be performed by the first user equipment of Figure 9, depending on the specific implementation.

At 901, the first user equipment receives, from a network function, an indication of a first time from a network function and an indication that the network function cannot provide a requested service to the first user equipment as a result of congestion control in the network function.

At 902, the first user equipment signals, to a second user equipment, an indication that the first user equipment is temporarily unable to provide a relay to a network for the second user equipment over a direct link, and an indication of a second time when the first user equipment will be able to provide said relay.

The second time may be dependent on the first time. By this, it is meant that the second time may be determined using the received first time, as described further below.

The signalling of 902 may be performed in response to the signalling of 901. This may be performed immediately (i.e. in direct response to receipt of the indication from the network function), or at a later time when some other condition has been fulfilled (such as receipt of a request to establish a direct link from the second user equipment).

For example, the first user equipment may receive, from the second user equipment, a second request to provide said relay before the indication of the time is received from the network function. In this case, the signal the indications of 901 may comprise signalling the indications using a direct link release request message in response to the second request.

As another example, the first user equipment may receive a second request to provide said relay after the indication of the time is received from the network function. In this case, said signal the indications of 901 may comprise signalling the indications using a direct link establishment reject message in response to receipt of the second request.

The second user equipment may be the user equipment described below in relation to Figure 10. The second user equipment may be, for example, a remote UE. The network function may be an access and mobility function.

The first user equipment may receive, from the second user equipment after said second time, a first request to provide said relay.

The first user equipment may signal an acceptance to the request. At this point, the first user equipment and the second user equipment are connected via a direct link (e.g. a UE-UE link/ PC5 direct link).

The indication of the first time may comprise a first value. The apparatus may be further caused to initiate a timer in response to receipt of the first value for said timer from a network function. This value may represent different qualities depending on the specific implementation. For example, the indication of a time when the first user equipment will be able to provide said relay may indicate a remaining time left on the timer when the indication is sent. As another example, the indication of a time when the first user equipment will be able to provide said relay may indicate the received first value.

Figure 10 illustrates potential operations that may be performed by an apparatus for a second user equipment. The second user equipment may be, for example, a remote UE. It is understood that although the following highlights certain features, that features described above in relation to the remote UE of Figures 7 and 8 may be performed by the second user equipment of Figure 10, depending on the specific implementation. The second user equipment of Figure 10 may interact with the first user equipment of Figure 9.

At 1001, the second user equipment receives, from a first user equipment, an indication that the first user equipment is temporarily unable to provide a relay to a network for the second user equipment over a direct link, and an indication of a time when the first user equipment will be able to provide said relay. The direct link may be, for example, a UE-UE link/ PC5 direct link.

The second user equipment may perform operations in response to receipt of the signalling of 1001. For example, the second user equipment may signal, to the first user equipment after said time, a first request to provide said relay.

The second user equipment may receive, from the first user equipment, an acceptance to the request. At this point, the second user equipment and the first user equipment are connected via a direct link. The second user equipment may use this direct link to request that the first user equipment provide a service for the second user equipment via the direct link.

The second user equipment may establish the direct link with the first user equipment before receiving said indications. In this case, said receive the indications may comprise receiving the indications in a direct link release request message.

The second user equipment may signal, to the first user equipment, a second request to provide said relay before receiving said indications. In this case, said receive the indications may comprise receiving the indications in response to the second request.

Said received indication of a time when the first user equipment will be able to provide said relay may indicate a remaining time left on a timer of the first user equipment when the indication is provided.

Said received indication of a time when the first user equipment will be able to provide said relay may indicate a start value of a timer of the first user equipment.

Figure 11 is a flow chart illustrating potential operations that may be performed by an apparatus for a first user equipment. The first user equipment may be, for example, a relay UE.

At 1101, the first user equipment signals discovery messages indicating that the first user equipment is available for providing a service to another user equipment via a direct link with the another user equipment. At this point, the first user equipment may or may not have a direct link established with another user equipment.

At 1102, the first user equipment receives, from a network function of the network, an indication that a requested service cannot be provided as a result of congestion control.

At 1103, in response to said receipt of the indication, the first user equipment stops said signalling of the discovery messages. This renders the first user equipment undiscoverable by the another user equipments looking for relay UEs.

When the first user equipment is connected to another user equipment via a direct link, the first user equipment may additionally signal the connected another user equipment a request to release the direct link. The first user equipment may additionally perform any of the actions described above in relation to Figure 9 when the connected another user equipment is the second user equipment described above in relation to Figure 10.

The first user equipment may signal, to the network function, a request for said requested service. In this case, the receiving the indication is performed in response to said signalling of the request.

The first user equipment may receive, from the network function, an indication of a first time after which the first user equipment is allowed to request said service. On receipt of the indication of the first time, the first user equipment initiates a timer using the value of the first time as an initial value. On expiry of this timer (i.e. at the first time), the first user equipment resumes signalling of the discovery messages (although it is understood that the first user equipment may not resume signalling discovery messages immediately at the first time, although this is an efficient option).

It is understood that although the above refers to "remote" UEs and "relay" UEs, that these are simply functions that a UE may perform. Consequently, a relay UE may additionally or alternatively perform non-relay UE related functions of a UE. Similarly, a remote UE may additionally or alternatively perform non-remote UE related functions of a UE, including access a network through an access point to the network through its own connection to the access point (i.e. not via a direct link with a relay UE). In other words, the remote and relay UEs referred to above may perform normal UE functions.

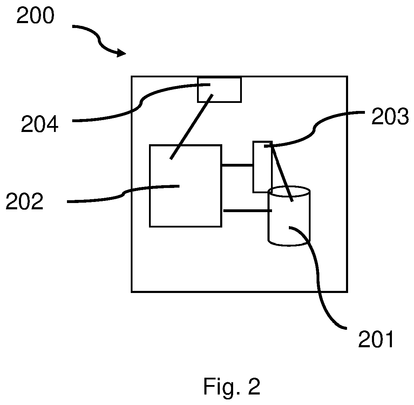

Figure 2 shows an example of a control apparatus for a communication system, for example to be coupled to and/or for controlling a station of an access system, such as a RAN node, e.g. a base station, gNB, a central unit of a cloud architecture or a node of a core network such as an MME or S-GW, a scheduling entity such as a spectrum management entity, or a server or host, for example an apparatus hosting an NRF, NWDAF, AMF, SMF, UDM/UDR etc. The control apparatus may be integrated with or external to a node or module of a core network or RAN. In some embodiments, base stations comprise a separate control apparatus unit or module. In other embodiments, the control apparatus can be another network element such as a radio network controller or a spectrum controller. The control apparatus 200 can be arranged to provide control on communications in the service area of the system. The apparatus 200 comprises at least one memory 201, at least one data processing unit 202, 203 and an input/output interface 204. Via the interface the control apparatus can be coupled to a receiver and a transmitter of the apparatus. The receiver and/or the transmitter may be implemented as a radio front end or a remote radio head. For example the control apparatus 200 or processor 201 can be configured to execute an appropriate software code to provide the control functions.

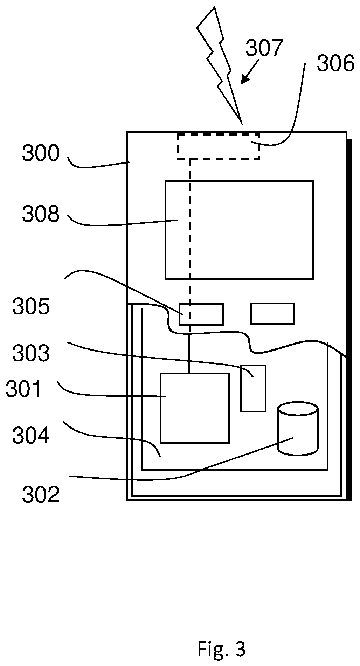

A possible wireless communication device will now be described in more detail with reference to Figure 3 showing a schematic, partially sectioned view of a communication device 300. Such a communication device is often referred to as user equipment (UE) or terminal. An appropriate mobile communication device may be provided by any device capable of sending and receiving radio signals. Non-limiting examples comprise a mobile station (MS) or mobile device such as a mobile phone or what is known as a 'smart phone', a computer provided with a wireless interface card or other wireless interface facility (e.g., USB dongle), personal data assistant (PDA) or a tablet provided with wireless communication capabilities, or any combinations of these or the like. A mobile communication device may provide, for example, communication of data for carrying communications such as voice, electronic mail (email), text message, multimedia and so on. Users may thus be offered and provided numerous services via their communication devices. Non-limiting examples of these services comprise two-way or multi-way calls, data communication or multimedia services or simply an access to a data communications network system, such as the Internet. Users may also be provided broadcast or multicast data. Non-limiting examples of the content comprise downloads, television and radio programs, videos, advertisements, various alerts and other information.

A wireless communication device may be for example a mobile device, that is, a device not fixed to a particular location, or it may be a stationary device. The wireless device may need human interaction for communication, or may not need human interaction for communication. In the present teachings the terms UE or "user" are used to refer to any type of wireless communication device.

The wireless device 300 may receive signals over an air or radio interface 307 via appropriate apparatus for receiving and may transmit signals via appropriate apparatus for transmitting radio signals. In Figure 3 transceiver apparatus is designated schematically by block 306. The transceiver apparatus 306 may be provided for example by means of a radio part and associated antenna arrangement. The antenna arrangement may be arranged internally or externally to the wireless device.

A wireless device is typically provided with at least one data processing entity 301, at least one memory 302 and other possible components 303 for use in software and hardware aided execution of tasks it is designed to perform, including control of access to and communications with access systems and other communication devices. The data processing, storage and other relevant control apparatus can be provided on an appropriate circuit board and/or in chipsets. This feature is denoted by reference 704. The user may control the operation of the wireless device by means of a suitable user interface such as key pad 305, voice commands, touch sensitive screen or pad, combinations thereof or the like. A display 308, a speaker and a microphone can be also provided. Furthermore, a wireless communication device may comprise appropriate connectors (either wired or wireless) to other devices and/or for connecting external accessories, for example hands-free equipment, thereto.

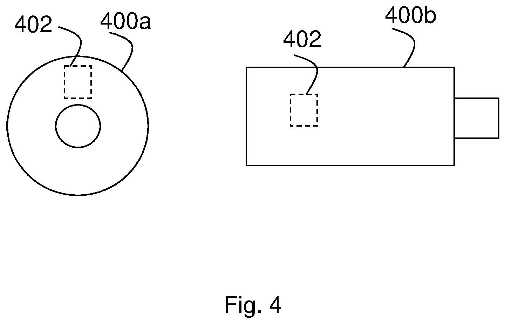

Figure 4 shows a schematic representation of non-volatile memory media 400a (e.g. computer disc (CD) or digital versatile disc (DVD)) and 400b (e.g. universal serial bus (USB) memory stick) storing instructions and/or parameters 402 which when executed by a processor allow the processor to perform one or more of the steps of the methods of Figure 9 and/or Figure 10 and/or Figure 11.

The embodiments may thus vary within the scope of the attached claims. In general, some embodiments may be implemented in hardware or special purpose circuits, software, logic or any combination thereof. For example, some aspects may be implemented in hardware, while other aspects may be implemented in firmware or software which may be executed by a controller, microprocessor or other computing device, although embodiments are not limited thereto. While various embodiments may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments may be implemented by computer software stored in a memory and executable by at least one data processor of the involved entities or by hardware, or by a combination of software and hardware. Further in this regard it should be noted that any procedures, e.g., as in Figure 9 and/or Figure 10, and/or Figure 11, may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (AStudy ItemC), gate level circuits and processors based on multi-core processor architecture, as non-limiting examples.

Alternatively or additionally some embodiments may be implemented using circuitry. The circuitry may be configured to perform one or more of the functions and/or method steps previously described. That circuitry may be provided in the base station and/or in the communications device.

As used in this application, the term "circuitry" may refer to one or more or all of the following:
(a) hardware-only circuit implementations (such as implementations in only analogue and/or digital circuitry);
(b) combinations of hardware circuits and software, such as:
   (i) a combination of analogue and/or digital hardware circuit(s) with software/firmware
      and
   (ii) any portions of hardware processor(s) with software (including digital signal processor(s)), software, and memory(ies) that work together to cause an apparatus, such as the communications device or base station to perform the various functions previously described; and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example integrated device.

The foregoing description has provided by way of exemplary and non-limiting examples a full and informative description of some embodiments. However, various modifications and adaptations may become apparent to those skilled in the relevant arts in view of the foregoing description, when read in conjunction with the accompanying drawings and the appended claims. However, all such and similar modifications of the teachings will still fall within the scope as defined in the appended claims.

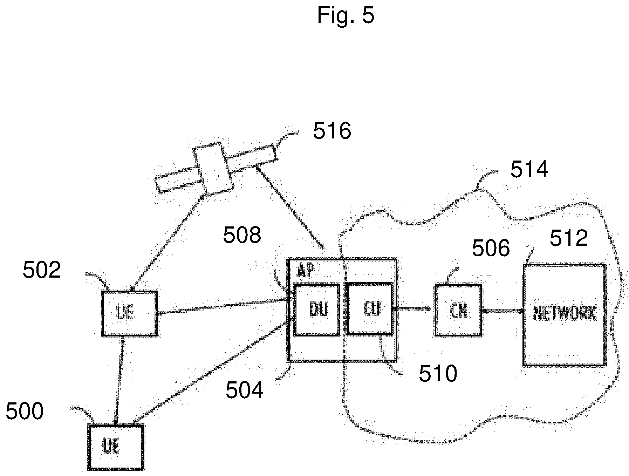

Figure 5 depicts examples of simplified system architectures only showing some elements and functional entities, all being logical units, whose implementation may differ from what is shown. The connections shown in Figure 5 are logical connections; the actual physical connections may be different. It is apparent to a person skilled in the art that the system typically comprises also other functions and structures than those shown in Figure 5.

The examples are not, however, restricted to the system given as an example but a person skilled in the art may apply the solution to other communication systems provided with necessary properties.

The example of Figure 5 shows a part of an exemplifying radio access network. For example, the radio access network may support sidelink communications described below in more detail.

Figure 5 shows devices 500 and 502. The devices 500 and 502 are configured to be in a wireless connection on one or more communication channels with a node 504. The node 504 is further connected to a core network 506. In one example, the node 504 may be an access node such as (e/g)NodeB serving devices in a cell. In one example, the node 504 may be a non-3GPP access node. The physical link from a device to a (e/g)NodeB is called uplink or reverse link and the physical link from the (e/g)NodeB to the device is called downlink or forward link. It should be appreciated that (e/g)NodeBs or their functionalities may be implemented by using any node, host, server or access point etc. entity suitable for such a usage.

A communications system typically comprises more than one (e/g)NodeB in which case the (e/g)NodeBs may also be configured to communicate with one another over links, wired or wireless, designed for the purpose. These links may be used for signalling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to devices. The antenna unit may comprise a plurality of antennas or antenna elements. The (e/g)NodeB is further connected to the core network 506 (CN or next generation core NGC). Depending on the deployed technology, the (e/g)NodeB is connected to a serving and packet data network gateway (S-GW +P-GW) or user plane function (UPF), for routing and forwarding user data packets and for providing connectivity of devices to one or more external packet data networks, and to a mobile management entity (MME) or access mobility management function (AMF), for controlling access and mobility of the devices.

Examples of a device are a subscriber unit, a user device, a user equipment (UE), a user terminal, a terminal device, a mobile station, a mobile device, etc

The device typically refers to a mobile or static device ( e.g. a portable or non-portable computing device) that includes wireless mobile communication devices operating with or without an universal subscriber identification module (USIM), including, but not limited to, the following types of devices: mobile phone, smartphone, personal digital assistant (PDA), handset, device using a wireless modem (alarm or measurement device, etc.), laptop and/or touch screen computer, tablet, game console, notebook, and multimedia device. It should be appreciated that a device may also be a nearly exclusive uplink only device, of which an example is a camera or video camera loading images or video clips to a network. A device may also be a device having capability to operate in Internet of Things (IoT) network which is a scenario in which objects are provided with the ability to transfer data over a network without requiring human-to-human or human-to-computer interaction, e.g. to be used in smart power grids and connected vehicles. The device may also utilise cloud. In some applications, a device may comprise a user portable device with radio parts (such as a watch, earphones or eyeglasses) and the computation is carried out in the cloud.

The device illustrates one type of an apparatus to which resources on the air interface are allocated and assigned, and thus any feature described herein with a device may be implemented with a corresponding apparatus, such as a relay node. An example of such a relay node is a layer 3 relay (self-backhauling relay) towards the base station. The device (or, in some examples, a layer 3 relay node) is configured to perform one or more of user equipment functionalities.

Various techniques described herein may also be applied to a cyber-physical system (CPS) (a system of collaborating computational elements controlling physical entities). CPS may enable the implementation and exploitation of massive amounts of interconnected information and communications technology, ICT, devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in Figure 5) may be implemented.

5G enables using multiple input - multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control). 5G is expected to have multiple radio interfaces, e.g. below 6GHz or above 24 GHz, cmWave and mmWave, and also being integrable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, 6 or above 24 GHz - cmWave and mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks 512, such as a public switched telephone network, or a VoIP network, or the Internet, or a private network, or utilize services provided by them. The communication network may also be able to support the usage of cloud services, for example at least part of core network operations may be carried out as a cloud service (this is depicted in Figure 5 by "cloud" 514). The communication system may also comprise a central control entity, or a like, providing facilities for networks of different operators to cooperate for example in spectrum sharing.

The technology of Edge cloud may be brought into a radio access network (RAN) by utilizing network function virtualization (NFV) and software defined networking (SDN). Using the technology of edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at or close to a remote antenna site (in a distributed unit, DU 508) and non-real time functions being carried out in a centralized manner (in a centralized unit, CU 510).

It should also be understood that the distribution of labour between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, Mobile Broadband, (MBB) or ensuring service availability for critical communications, and future railway/maritime/aeronautical communications. Satellite communication may utilise geostationary earth orbit (GEO) satellite systems, but also low earth orbit (LEO) satellite systems, in particular mega-constellations (systems in which hundreds of (nano)satellites are deployed). Each satellite in the mega-constellation may cover several satellite-enabled network entities that create on-ground cells. The on-ground cells may be created through an on-ground relay node or by a gNB located on-ground or in a satellite.

It is obvious for a person skilled in the art that the depicted system is only an example of a part of a radio access system and in practice, the system may comprise a plurality of (e/g)NodeB s, the device may have an access to a plurality of radio cells and the system may comprise also other apparatuses, such as physical layer relay nodes or other network elements, etc. At least one of the (e/g)NodeBs or may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of Figure 5 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)Node Bs, includes, in addition to Home (e/g)NodeBs (H(e/g)nodeBs), a home node B gateway, or HNB-GW (not shown in Figure 5). A HNB Gateway (HNB-GW), which is typically installed within an operator's network may aggregate traffic from a large number of HNBs back to a core network.

## Claims

1. A first user equipment (802) comprising:
- means to send, to a network function (803), a service request for a service;
- means to receive, from the network function, a response to the service request for the service, the response indicating rejection of the service request, the response comprising a value for a backoff timer of the first user equipment (802) and an indication that the network function cannot provide the service to the first user equipment (802) as a result of congestion control in the network function;
- means for starting the backoff timer of the first user equipment (802) having the value;
- means to receive, from a second user equipment (801), a first direct link establishment request to establish a direct link between the first user equipment (802) and the second user equipment (801), the direct link for providing, to the second user equipment, a 5G proximity services, ProSe, Layer-3 UE-to-Network relaying service of the first user equipment; and
- means to signal, to the second user equipment (801), a first direct link establishment reject message that indicates the first user equipment (802) is temporarily unavailable to provide said 5G ProSe Layer-3 UE-to-Network relaying service, the first direct link establishment reject message comprising an indication of a second time when the first user equipment (802) will be available to provide said 5G ProSe Layer-3 UE-to-Network relaying service.

2. The first user equipment (802) in accordance with claim 1, wherein the second time is based on the value for the backoff timer received from the network function.

3. The first user equipment (802) in accordance with claim 1 or 2, wherein the network function is an access and mobility function.

4. The first user equipment (802) in accordance with one of the preceding claims, further comprising means to receive from the second user equipment (801), a second direct link establishment request to establish a direct link between the first user equipment (802) and the second user equipment (801) and in response to the second direct link establishment request and after the second time when the first user equipment (802) is available to provide said 5G ProSe Layer-3 UE-to-Network relaying service, sending a second direct link establishment acceptance message indicating that the direct link between the first user equipment (802) and the second user equipment (801) has been established.

5. The first user equipment (802) in accordance with any one of claims 1 to 4, wherein said indication of the second time when the first user equipment will be available to provide said 5G ProSe Layer-3 UE-to-Network relaying service indicates
- a remaining time left on the backoff timer of the first user equipment when the indication is provided, or
- the value for the backoff timer of the first user equipment.

6. A method for a first user equipment (802), comprising:
- sending (8001), to a network function (803), a service request for a service;
- receiving (8002), from the network function, a response to the service request for the service, the response indicating rejection of the service request, the response comprising a value for a backoff timer of the first user equipment (802) and an indication that the network function cannot provide the service to the first user equipment (802) as a result of congestion control in the network function;
- starting the backoff timer of the first user equipment (802) having the value;
- receiving (8004), from a second user equipment (801), a first direct link establishment request to establish a direct link between the first user equipment (802) and the second user equipment (801), the direct link for providing, to the second user equipment, a 5G ProSe Layer-3 UE-to-Network relaying service of the first user equipment; and
- signaling (8005), to the second user equipment (801), a first direct link establishment reject message that indicates the first user equipment (802) is temporarily unavailable to provide said 5G ProSe Layer-3 UE-to-Network relaying service, the first direct link establishment reject message comprising an indication of a second time when the first user equipment will be available to provide said 5G ProSe Layer-3 UE-to-Network relaying service.

7. The method in accordance with claim 6, wherein the second time is based on the value for the backoff timer from the network function.

8. The method in accordance with claims 6 or 7, wherein the network function is an access and mobility function.

9. The method in accordance with any of the claims 6-8, further comprising receiving, from the second user equipment (801), a second direct link establishment request to establish a direct link between the first user equipment (802) and the second user equipment (801), and in response to the second direct link establishment request and after the second time when the first user equipment is available to provide said 5G ProSe Layer-3 UE-to-Network relaying service, sending a second direct link establishment acceptance message indicating that the direct link between the first user equipment (802) and the second user equipment (801) has been established.

10. The method in accordance with one of the claims 6-9, wherein said indication of the second time when the first user equipment will be available to provide said 5G ProSe Layer-3 UE-to-Network relaying service indicates
- a remaining time left on the backoff timer of the first user equipment when the indication is provided, or
- the value for the backoff timer of the first user equipment.

11. A computer-readable storage medium comprising instructions which, when executed by a processor, cause the processor to carry out the steps of:
- sending, to a network function, a service request for a service;
- receiving, from the network function, a response to the service request for the service, the response indicating rejection of the service request, the response comprising a value for a backoff timer of the first user equipment (802) and an indication that the network function cannot provide the service to the first user equipment (802) as a result of congestion control in the network function;
- starting the backoff timer of the first user equipment (802) having the value;
- receiving, from a second user equipment (801), a first direct link establishment request to establish a direct link between the first user equipment (802) and the second user equipment (801), the direct link for providing, to the second user equipment, a 5G ProSe Layer-3 UE-to-Network relaying service of the first user equipment; and
- signaling, to the second user equipment (801), a first direct link establishment reject message that indicates the first user equipment (802) is temporarily unavailable to provide said 5G ProSe Layer-3 UE-to-Network relaying service, the first direct link establishment reject message comprising an indication of a second time when the first user equipment will be available to provide said 5G ProSe Layer-3 UE-to-Network relaying service.

12. A second user equipment (801) comprising:
- means to send, to a first user equipment (802), a first direct link establishment request to establish a direct link between the first user equipment (802) and the second user equipment (801), the direct link for providing, to the second user equipment, a 5G ProSe Layer-3 UE-to-Network relaying service of the first user equipment; and
- means to receive, from the first user equipment, a direct link establishment reject message that indicates that the first user equipment (802) is temporarily unavailable to provide said 5G ProSe Layer-3 UE-to-Network relaying service, the direct link establishment reject message comprising an indication of a second time when the first user equipment will be available to provide said 5G ProSe Layer-3 UE-to-Network relaying service.

13. The second user equipment (801) in accordance with claim 12, further comprising:
- means to send to the first user equipment (802) after the second time, a second direct link establishment request to establish a direct link between the first user equipment (802) and the second user equipment (801);
- means to receive a response to the second direct link establishment request, a direct link establishment acceptance message indicating that the direct link between the first user equipment (802) and the second user equipment (801) has been established.

14. The second user equipment (801) in accordance with one of the claims 12-13, wherein said indication of a second time when the first user equipment will be available to provide said 5G ProSe Layer-3 UE-to-Network relaying service indicates
- a remaining time left on a backoff timer of the first user equipment when the indication is provided, or
- the value for a backoff timer of the first user equipment.

15. A method for a second user equipment (801), comprising:
- sending (8004), to a first user equipment (802), a first direct link establishment request to establish a direct link between the first user equipment (802) and the second user equipment (801), the direct link for providing, to the second user equipment a 5G ProSe Layer-3 UE-to-Network relaying service of the first user equipment; and
- receiving (8005), from the first user equipment (802), a first direct link establishment reject message that indicates the first user equipment (802) is temporarily unavailable to provide said 5G ProSe Layer-3 UE-to-Network relaying service, the first direct link establishment reject message comprising an indication of a second time when the first user equipment will be available to provide said 5G ProSe Layer-3 UE-to-Network relaying service.

16. The method in accordance with claim 15, wherein said indication of a second time when the first user equipment will be available to provide said 5G ProSe Layer-3 UE-to-Network relaying service indicates
- a remaining time left on a backoff timer of the first user equipment when the indication is provided, or
- the value for a backoff timer of the first user equipment.

17. A computer-readable storage medium comprising instructions which, when executed by a second user equipment (801), cause the second user equipment to carry out the steps of:
- sending, to a first user equipment (802), a first direct link establishment request to establish a direct link between the first user equipment (802) and the second user equipment (801), the direct link for providing, to the second user equipment a 5G ProSe Layer-3 UE-to-Network relaying service of the first user equipment; and
- receiving, from the first user equipment (802), a first direct link establishment reject message that indicates the first user equipment (802) is temporarily unavailable to provide said 5G ProSe Layer-3 UE-to-Network relaying service, the first direct link establishment reject message comprising an indication of a second time when the first user equipment will be available to provide said relaying service.

## Patentansprüche

1. Ein erstes Benutzergerät (802), umfassend:
- Mittel zum Senden, an eine Netzwerkfunktion (803), einer Dienstanforderung für einen Dienst;
- Mittel zum Empfangen, von der Netzwerkfunktion, einer Antwort auf die Dienstanforderung für den Dienst, wobei die Antwort eine Ablehnung der Dienstanforderung anzeigt, wobei die Antwort einen Wert für einen Backoff-Timer des ersten Benutzergeräts (802) und eine Angabe umfasst, dass die Netzwerkfunktion den Dienst dem ersten Benutzergerät (802) infolge einer Überlaststeuerung in der Netzwerkfunktion nicht bereitstellen kann;
- Mittel zum Starten des Backoff-Timers des ersten Benutzergeräts (802) mit dem Wert;
- Mittel zum Empfangen, von einem zweiten Benutzergerät (801), einer ersten Direktverbindungsaufbauanforderung zum Aufbauen einer Direktverbindung zwischen dem ersten Benutzergerät (802) und dem zweiten Benutzergerät (801), wobei die Direktverbindung dazu dient, dem zweiten Benutzergerät einen 5G-ProSe-Schicht-3-UE-zu-Netzwerk-Relaydienst des ersten Benutzergeräts bereitzustellen; und
- Mittel zum Signalisieren, an das zweite Benutzergerät (801), einer ersten Direktverbindungsaufbau-Ablehnungsnachricht, die anzeigt, dass das erste Benutzergerät (802) vorübergehend nicht verfügbar ist, um den genannten 5G-ProSe-Schicht-3-UE-zu-Netzwerk-Relaydienst bereitzustellen, wobei die erste Direktverbindungsaufbau-Ablehnungsnachricht eine Angabe eines zweiten Zeitpunkts umfasst, zu dem das erste Benutzergerät (802) verfügbar sein wird, um den genannten 5G-ProSe-Schicht-3-UE-zu-Netzwerk-Relaydienst bereitzustellen.

2. Das erste Benutzergerät (802) nach Anspruch 1, wobei der zweite Zeitpunkt auf dem Wert des von der Netzwerkfunktion empfangenen Backoff-Timers basiert.

3. Das erste Benutzergerät (802) nach Anspruch 1 oder 2, wobei die Netzwerkfunktion eine Zugangs- und Mobilitätsmanagementfunktion ist.

4. Das erste Benutzergerät (802) nach einem der vorhergehenden Ansprüche, ferner umfassend Mittel zum Empfangen vom zweiten Benutzergerät (801) einer zweiten Direktverbindungsaufbauanforderung zum Aufbauen einer Direktverbindung zwischen dem ersten Benutzergerät (802) und dem zweiten Benutzergerät (801) und, in Antwort auf die zweite Direktverbindungsaufbauanforderung und nach dem zweiten Zeitpunkt, zu dem das erste Benutzergerät (802) verfügbar ist, um den genannten 5G-ProSe-Schicht-3-UE-zu-Netzwerk-Relaydienst bereitzustellen, Senden einer zweiten Direktverbindungsaufbau-Annahmenachricht, die anzeigt, dass die Direktverbindung zwischen dem ersten Benutzergerät (802) und dem zweiten Benutzergerät (801) aufgebaut wurde.

5. Das erste Benutzergerät (802) nach einem der Ansprüche 1 bis 4, wobei die genannte Angabe des zweiten Zeitpunkts, zu dem das erste Benutzergerät verfügbar sein wird, um den genannten 5G-ProSe-Schicht-3-UE-zu-Netzwerk-Relaydienst bereitzustellen, Folgendes anzeigt:
- eine auf dem Backoff-Timer des ersten Benutzergeräts verbleibende Restzeit, wenn die Angabe bereitgestellt wird, oder
- den Wert des Backoff-Timers des ersten Benutzergeräts.

6. Ein Verfahren für ein erstes Benutzergerät (802), umfassend:
- Senden (8001), an eine Netzwerkfunktion (803), einer Dienstanforderung für einen Dienst;
- Empfangen (8002), von der Netzwerkfunktion, einer Antwort auf die Dienstanforderung für den Dienst, wobei die Antwort eine Ablehnung der Dienstanforderung anzeigt, wobei die Antwort einen Wert für einen Backoff-Timer des ersten Benutzergeräts (802) und eine Angabe umfasst, dass die Netzwerkfunktion den Dienst dem ersten Benutzergerät (802) infolge einer Überlaststeuerung in der Netzwerkfunktion nicht bereitstellen kann;
- Starten des Backoff-Timers des ersten Benutzergeräts (802) mit dem Wert;
- Empfangen (8004), von einem zweiten Benutzergerät (801), einer ersten Direktverbindungsaufbauanforderung zum Aufbauen einer Direktverbindung zwischen dem ersten Benutzergerät (802) und dem zweiten Benutzergerät (801), wobei die Direktverbindung dazu dient, dem zweiten Benutzergerät einen 5G-ProSe-Schicht-3-UE-zu-Netzwerk-Relaydienst des ersten Benutzergeräts bereitzustellen; und
- Signalisieren (8005), an das zweite Benutzergerät (801), einer ersten Direktverbindungsaufbau-Ablehnungsnachricht, die anzeigt, dass das erste Benutzergerät (802) vorübergehend nicht verfügbar ist, um den genannten 5G-ProSe-Schicht-3-UE-zu-Netzwerk-Relaydienst bereitzustellen, wobei die erste Direktverbindungsaufbau-Ablehnungsnachricht eine Angabe eines zweiten Zeitpunkts umfasst, zu dem das erste Benutzergerät verfügbar sein wird, um den genannten 5G-ProSe-Schicht-3-UE-zu-Netzwerk-Relaydienst bereitzustellen.

7. Das Verfahren nach Anspruch 6, wobei der zweite Zeitpunkt auf dem Wert des Backoff-Timers von der Netzwerkfunktion basiert.

8. Das Verfahren nach Anspruch 6 oder 7, wobei die Netzwerkfunktion eine Zugangs- und Mobilitätsmanagementfunktion ist.

9. Das Verfahren nach einem der Ansprüche 6 bis 8, ferner umfassend das Empfangen, vom zweiten Benutzergerät (801), einer zweiten Direktverbindungsaufbauanforderung zum Aufbauen einer Direktverbindung zwischen dem ersten Benutzergerät (802) und dem zweiten Benutzergerät (801), und, in Antwort auf die zweite Direktverbindungsaufbauanforderung und nach dem zweiten Zeitpunkt, zu dem das erste Benutzergerät verfügbar ist, um den genannten 5G-ProSe-Schicht-3-UE-zu-Netzwerk-Relaydienst bereitzustellen, Senden einer zweiten Direktverbindungsaufbau-Annahmenachricht, die anzeigt, dass die Direktverbindung zwischen dem ersten Benutzergerät (802) und dem zweiten Benutzergerät (801) aufgebaut wurde.

10. Das Verfahren nach einem der Ansprüche 6 bis 9, wobei die genannte Angabe des zweiten Zeitpunkts, zu dem das erste Benutzergerät verfügbar sein wird, um den genannten 5G-ProSe-Schicht-3-UE-zu-Netzwerk-Relaydienst bereitzustellen, Folgendes anzeigt:
- eine auf dem Backoff-Timer des ersten Benutzergeräts verbleibende Restzeit, wenn die Angabe bereitgestellt wird, oder
- den Wert des Backoff-Timers des ersten Benutzergeräts.

11. Ein computerlesbares Speichermedium, umfassend Anweisungen, die, wenn sie von einem Prozessor ausgeführt werden, den Prozessor veranlassen, die folgenden Schritte auszuführen:
- Senden, an eine Netzwerkfunktion, einer Dienstanforderung für einen Dienst;
- Empfangen, von der Netzwerkfunktion, einer Antwort auf die Dienstanforderung für den Dienst, wobei die Antwort eine Ablehnung der Dienstanforderung anzeigt, wobei die Antwort einen Wert für einen Backoff-Timer des ersten Benutzergeräts (802) und eine Angabe umfasst, dass die Netzwerkfunktion den Dienst dem ersten Benutzergerät (802) infolge einer Überlaststeuerung in der Netzwerkfunktion nicht bereitstellen kann;
- Starten des Backoff-Timers des ersten Benutzergeräts (802) mit dem Wert;
- Empfangen, von einem zweiten Benutzergerät (801), einer ersten Direktverbindungsaufbauanforderung zum Aufbauen einer Direktverbindung zwischen dem ersten Benutzergerät (802) und dem zweiten Benutzergerät (801), wobei die Direktverbindung dazu dient, dem zweiten Benutzergerät einen 5G-ProSe-Schicht-3-UE-zu-Netzwerk-Relaydienst des ersten Benutzergeräts bereitzustellen; und
- Signalisieren, an das zweite Benutzergerät (801), einer ersten Direktverbindungsaufbau-Ablehnungsnachricht, die anzeigt, dass das erste Benutzergerät (802) vorübergehend nicht verfügbar ist, um den genannten 5G-ProSe-Schicht-3-UE-zu-Netzwerk-Relaydienst bereitzustellen, wobei die erste Direktverbindungsaufbau-Ablehnungsnachricht eine Angabe eines zweiten Zeitpunkts umfasst, zu dem das erste Benutzergerät verfügbar sein wird, um den genannten 5G-ProSe-Schicht-3-UE-zu-Netzwerk-Relaydienst bereitzustellen.

12. Ein zweites Benutzergerät (801), umfassend:
- Mittel zum Senden, an ein erstes Benutzergerät (802), einer ersten Direktverbindungsaufbauanforderung zum Aufbauen einer Direktverbindung zwischen dem ersten Benutzergerät (802) und dem zweiten Benutzergerät (801), wobei die Direktverbindung dazu dient, dem zweiten Benutzergerät einen 5G-ProSe-Schicht-3-UE-zu-Netzwerk-Relaydienst des ersten Benutzergeräts bereitzustellen; und
- Mittel zum Empfangen, vom ersten Benutzergerät, einer Direktverbindungsaufbau-Ablehnungsnachricht, die anzeigt, dass das erste Benutzergerät (802) vorübergehend nicht verfügbar ist, um den genannten 5G-ProSe-Schicht-3-UE-zu-Netzwerk-Relaydienst bereitzustellen, wobei die Direktverbindungsaufbau-Ablehnungsnachricht eine Angabe eines zweiten Zeitpunkts umfasst, zu dem das erste Benutzergerät verfügbar sein wird, um den genannten 5G-ProSe-Schicht-3-UE-zu-Netzwerk-Relaydienst bereitzustellen.

13. Das zweite Benutzergerät (801) nach Anspruch 12, ferner umfassend:
- Mittel zum Senden an das erste Benutzergerät (802) nach dem zweiten Zeitpunkt einer zweiten Direktverbindungsaufbauanforderung zum Aufbauen einer Direktverbindung zwischen dem ersten Benutzergerät (802) und dem zweiten Benutzergerät (801);
- Mittel zum Empfangen einer Antwort auf die zweite Direktverbindungsaufbauanforderung, einer Direktverbindungsaufbau-Annahmenachricht, die anzeigt, dass die Direktverbindung zwischen dem ersten Benutzergerät (802) und dem zweiten Benutzergerät (801) aufgebaut wurde.

14. Das zweite Benutzergerät (801) nach einem der Ansprüche 12 bis 13, wobei die genannte Angabe eines zweiten Zeitpunkts, zu dem das erste Benutzergerät verfügbar sein wird, um den genannten 5G-ProSe-Schicht-3-UE-zu-Netzwerk-Relaydienst bereitzustellen, Folgendes anzeigt:
- eine auf einem Backoff-Timer des ersten Benutzergeräts verbleibende Restzeit, wenn die Angabe bereitgestellt wird, oder
- den Wert eines Backoff-Timers des ersten Benutzergeräts.

15. Ein Verfahren für ein zweites Benutzergerät (801), umfassend:
- Senden (8004), an ein erstes Benutzergerät (802), einer ersten Direktverbindungsaufbauanforderung zum Aufbauen einer Direktverbindung zwischen dem ersten Benutzergerät (802) und dem zweiten Benutzergerät (801), wobei die Direktverbindung dazu dient, dem zweiten Benutzergerät einen 5G-ProSe-Schicht-3-UE-zu-Netzwerk-Relaydienst des ersten Benutzergeräts bereitzustellen; und
- Empfangen (8005), vom ersten Benutzergerät (802), einer ersten Direktverbindungsaufbau-Ablehnungsnachricht, die anzeigt, dass das erste Benutzergerät (802) vorübergehend nicht verfügbar ist, um den genannten 5G-ProSe-Schicht-3-UE-zu-Netzwerk-Relaydienst bereitzustellen, wobei die erste Direktverbindungsaufbau-Ablehnungsnachricht eine Angabe eines zweiten Zeitpunkts umfasst, zu dem das erste Benutzergerät verfügbar sein wird, um den genannten 5G-ProSe-Schicht-3-UE-zu-Netzwerk-Relaydienst bereitzustellen.

16. Das Verfahren nach Anspruch 15, wobei die genannte Angabe eines zweiten Zeitpunkts, zu dem das erste Benutzergerät verfügbar sein wird, um den genannten 5G-ProSe-Schicht-3-UE-zu-Netzwerk-Relaydienst bereitzustellen, Folgendes anzeigt:
- eine auf einem Backoff-Timer des ersten Benutzergeräts verbleibende Restzeit, wenn die Angabe bereitgestellt wird, oder
- den Wert eines Backoff-Timers des ersten Benutzergeräts.

17. Ein computerlesbares Speichermedium, umfassend Anweisungen, die, wenn sie von einem zweiten Benutzergerät (801) ausgeführt werden, das zweite Benutzergerät veranlassen, die folgenden Schritte auszuführen:
- Senden, an ein erstes Benutzergerät (802), einer ersten Direktverbindungsaufbauanforderung zum Aufbauen einer Direktverbindung zwischen dem ersten Benutzergerät (802) und dem zweiten Benutzergerät (801), wobei die Direktverbindung dazu dient, dem zweiten Benutzergerät einen 5G-ProSe-Schicht-3-UE-zu-Netzwerk-Relaydienst des ersten Benutzergeräts bereitzustellen; und
- Empfangen, vom ersten Benutzergerät (802), einer ersten Direktverbindungsaufbau-Ablehnungsnachricht, die anzeigt, dass das erste Benutzergerät (802) vorübergehend nicht verfügbar ist, um den genannten 5G-ProSe-Schicht-3-UE-zu-Netzwerk-Relaydienst bereitzustellen, wobei die erste Direktverbindungsaufbau-Ablehnungsnachricht eine Angabe eines zweiten Zeitpunkts umfasst, zu dem das erste Benutzergerät verfügbar sein wird, um den genannten Relaydienst bereitzustellen.

## Revendications

1. Un premier équipement utilisateur (802) comprenant :
- des moyens pour envoyer, à une fonction de réseau (803), une demande de service pour un service ;
- des moyens pour recevoir, de la fonction de réseau, une réponse à la demande de service pour le service, la réponse indiquant un rejet de la demande de service, la réponse comprenant une valeur pour une temporisation d'attente du premier équipement utilisateur (802) et une indication que la fonction de réseau ne peut pas fournir le service au premier équipement utilisateur (802) en raison d'un contrôle de congestion dans la fonction de réseau ;
- des moyens pour démarrer la temporisation d'attente du premier équipement utilisateur (802) ayant la valeur ;
- des moyens pour recevoir, d'un deuxième équipement utilisateur (801), une première demande d'établissement de liaison directe pour établir une liaison directe entre le premier équipement utilisateur (802) et le deuxième équipement utilisateur (801), la liaison directe servant à fournir, au deuxième équipement utilisateur, un service de relais UE-vers-réseau ProSe 5G de couche 3 du premier équipement utilisateur ; et
- des moyens pour signaler, au deuxième équipement utilisateur (801), un premier message de rejet d'établissement de liaison directe qui indique que le premier équipement utilisateur (802) est temporairement indisponible pour fournir ledit service de relais UE-vers-réseau ProSe 5G de couche 3, le premier message de rejet d'établissement de liaison directe comprenant une indication d'un deuxième temps auquel le premier équipement utilisateur (802) sera disponible pour fournir ledit service de relais UE-vers-réseau ProSe 5G de couche 3.

2. Le premier équipement utilisateur (802) selon la revendication 1, dans lequel le deuxième temps est basé sur la valeur de la temporisation d'attente reçue de la fonction de réseau.

3. Le premier équipement utilisateur (802) selon la revendication 1 ou 2, dans lequel la fonction de réseau est une fonction d'accès et de gestion de la mobilité.

4. Le premier équipement utilisateur (802) selon l'une quelconque des revendications précédentes, comprenant en outre des moyens pour recevoir du deuxième équipement utilisateur (801), une deuxième demande d'établissement de liaison directe pour établir une liaison directe entre le premier équipement utilisateur (802) et le deuxième équipement utilisateur (801) et, en réponse à la deuxième demande d'établissement de liaison directe et après le deuxième temps auquel le premier équipement utilisateur (802) est disponible pour fournir ledit service de relais UE-vers-réseau ProSe 5G de couche 3, envoyer un deuxième message d'acceptation d'établissement de liaison directe indiquant que la liaison directe entre le premier équipement utilisateur (802) et le deuxième équipement utilisateur (801) a été établie.

5. Le premier équipement utilisateur (802) selon l'une quelconque des revendications 1 à 4, dans lequel ladite indication du deuxième temps auquel le premier équipement utilisateur sera disponible pour fournir ledit service de relais UE-vers-réseau ProSe 5G de couche 3 indique
- un temps restant sur la temporisation d'attente du premier équipement utilisateur lorsque l'indication est fournie, ou
- la valeur de la temporisation d'attente du premier équipement utilisateur.

6. Un procédé pour un premier équipement utilisateur (802), comprenant :
- l'envoi (8001), à une fonction de réseau (803), d'une demande de service pour un service ;
- la réception (8002), de la fonction de réseau, d'une réponse à la demande de service pour le service, la réponse indiquant un rejet de la demande de service, la réponse comprenant une valeur pour une temporisation d'attente du premier équipement utilisateur (802) et une indication que la fonction de réseau ne peut pas fournir le service au premier équipement utilisateur (802) en raison d'un contrôle de congestion dans la fonction de réseau ;
- le démarrage de la temporisation d'attente du premier équipement utilisateur (802) ayant la valeur ;
- la réception (8004), d'un deuxième équipement utilisateur (801), d'une première demande d'établissement de liaison directe pour établir une liaison directe entre le premier équipement utilisateur (802) et le deuxième équipement utilisateur (801), la liaison directe servant à fournir, au deuxième équipement utilisateur, un service de relais UE-vers-réseau ProSe 5G de couche 3 du premier équipement utilisateur ; et
- la signalisation (8005), au deuxième équipement utilisateur (801), d'un premier message de rejet d'établissement de liaison directe qui indique que le premier équipement utilisateur (802) est temporairement indisponible pour fournir ledit service de relais UE-vers-réseau ProSe 5G de couche 3, le premier message de rejet d'établissement de liaison directe comprenant une indication d'un deuxième temps auquel le premier équipement utilisateur sera disponible pour fournir ledit service de relais UE-vers-réseau ProSe 5G de couche 3.

7. Le procédé selon la revendication 6, dans lequel le deuxième temps est basé sur la valeur de la temporisation d'attente provenant de la fonction de réseau.

8. Le procédé selon la revendication 6 ou 7, dans lequel la fonction de réseau est une fonction d'accès et de gestion de la mobilité.

9. Le procédé selon l'une quelconque des revendications 6 à 8, comprenant en outre la réception, du deuxième équipement utilisateur (801), d'une deuxième demande d'établissement de liaison directe pour établir une liaison directe entre le premier équipement utilisateur (802) et le deuxième équipement utilisateur (801), et, en réponse à la deuxième demande d'établissement de liaison directe et après le deuxième temps auquel le premier équipement utilisateur est disponible pour fournir ledit service de relais UE-vers-réseau ProSe 5G de couche 3, l'envoi d'un deuxième message d'acceptation d'établissement de liaison directe indiquant que la liaison directe entre le premier équipement utilisateur (802) et le deuxième équipement utilisateur (801) a été établie.

10. Le procédé selon l'une quelconque des revendications 6 à 9, dans lequel ladite indication du deuxième temps auquel le premier équipement utilisateur sera disponible pour fournir ledit service de relais UE-vers-réseau ProSe 5G de couche 3 indique
- un temps restant sur la temporisation d'attente du premier équipement utilisateur lorsque l'indication est fournie, ou
- la valeur de la temporisation d'attente du premier équipement utilisateur.

11. Un support de stockage lisible par ordinateur comprenant des instructions qui, lorsqu'elles sont exécutées par un processeur, amènent le processeur à effectuer les étapes consistant à :
- envoyer, à une fonction de réseau, une demande de service pour un service ;
- recevoir, de la fonction de réseau, une réponse à la demande de service pour le service, la réponse indiquant un rejet de la demande de service, la réponse comprenant une valeur pour une temporisation d'attente du premier équipement utilisateur (802) et une indication que la fonction de réseau ne peut pas fournir le service au premier équipement utilisateur (802) en raison d'un contrôle de congestion dans la fonction de réseau ;
- démarrer la temporisation d'attente du premier équipement utilisateur (802) ayant la valeur ;
- recevoir, d'un deuxième équipement utilisateur (801), une première demande d'établissement de liaison directe pour établir une liaison directe entre le premier équipement utilisateur (802) et le deuxième équipement utilisateur (801), la liaison directe servant à fournir, au deuxième équipement utilisateur, un service de relais UE-vers-réseau ProSe 5G de couche 3 du premier équipement utilisateur ; et
- signaler, au deuxième équipement utilisateur (801), un premier message de rejet d'établissement de liaison directe qui indique que le premier équipement utilisateur (802) est temporairement indisponible pour fournir ledit service de relais UE-vers-réseau ProSe 5G de couche 3, le premier message de rejet d'établissement de liaison directe comprenant une indication d'un deuxième temps auquel le premier équipement utilisateur sera disponible pour fournir ledit service de relais UE-vers-réseau ProSe 5G de couche 3.

12. Un deuxième équipement utilisateur (801) comprenant :
- des moyens pour envoyer, à un premier équipement utilisateur (802), une première demande d'établissement de liaison directe pour établir une liaison directe entre le premier équipement utilisateur (802) et le deuxième équipement utilisateur (801), la liaison directe servant à fournir, au deuxième équipement utilisateur, un service de relais UE-vers-réseau ProSe 5G de couche 3 du premier équipement utilisateur ; et
- des moyens pour recevoir, du premier équipement utilisateur, un message de rejet d'établissement de liaison directe qui indique que le premier équipement utilisateur (802) est temporairement indisponible pour fournir ledit service de relais UE-vers-réseau ProSe 5G de couche 3, le message de rejet d'établissement de liaison directe comprenant une indication d'un deuxième temps auquel le premier équipement utilisateur sera disponible pour fournir ledit service de relais UE-vers-réseau ProSe 5G de couche 3.

13. Le deuxième équipement utilisateur (801) selon la revendication 12, comprenant en outre :
- des moyens pour envoyer au premier équipement utilisateur (802) après le deuxième temps, une deuxième demande d'établissement de liaison directe pour établir une liaison directe entre le premier équipement utilisateur (802) et le deuxième équipement utilisateur (801) ;
- des moyens pour recevoir une réponse à la deuxième demande d'établissement de liaison directe, un message d'acceptation d'établissement de liaison directe indiquant que la liaison directe entre le premier équipement utilisateur (802) et le deuxième équipement utilisateur (801) a été établie.

14. Le deuxième équipement utilisateur (801) selon l'une quelconque des revendications 12 à 13, dans lequel ladite indication d'un deuxième temps auquel le premier équipement utilisateur sera disponible pour fournir ledit service de relais UE-vers-réseau ProSe 5G de couche 3 indique
- un temps restant sur une temporisation d'attente du premier équipement utilisateur lorsque l'indication est fournie, ou
- la valeur d'une temporisation d'attente du premier équipement utilisateur.

15. Un procédé pour un deuxième équipement utilisateur (801), comprenant :
- l'envoi (8004), à un premier équipement utilisateur (802), d'une première demande d'établissement de liaison directe pour établir une liaison directe entre le premier équipement utilisateur (802) et le deuxième équipement utilisateur (801), la liaison directe servant à fournir, au deuxième équipement utilisateur, un service de relais UE-vers-réseau ProSe 5G de couche 3 du premier équipement utilisateur ; et
- la réception (8005), du premier équipement utilisateur (802), d'un premier message de rejet d'établissement de liaison directe qui indique que le premier équipement utilisateur (802) est temporairement indisponible pour fournir ledit service de relais UE-vers-réseau ProSe 5G de couche 3, le premier message de rejet d'établissement de liaison directe comprenant une indication d'un deuxième temps auquel le premier équipement utilisateur sera disponible pour fournir ledit service de relais UE-vers-réseau ProSe 5G de couche 3.

16. Le procédé selon la revendication 15, dans lequel ladite indication d'un deuxième temps auquel le premier équipement utilisateur sera disponible pour fournir ledit service de relais UE-vers-réseau ProSe 5G de couche 3 indique
- un temps restant sur une temporisation d'attente du premier équipement utilisateur lorsque l'indication est fournie, ou
- la valeur d'une temporisation d'attente du premier équipement utilisateur.

17. Un support de stockage lisible par ordinateur comprenant des instructions qui, lorsqu'elles sont exécutées par un deuxième équipement utilisateur (801), amènent le deuxième équipement utilisateur à effectuer les étapes consistant à :
- envoyer, à un premier équipement utilisateur (802), une première demande d'établissement de liaison directe pour établir une liaison directe entre le premier équipement utilisateur (802) et le deuxième équipement utilisateur (801), la liaison directe servant à fournir, au deuxième équipement utilisateur, un service de relais UE-vers-réseau ProSe 5G de couche 3 du premier équipement utilisateur ; et
- recevoir, du premier équipement utilisateur (802), un premier message de rejet d'établissement de liaison directe qui indique que le premier équipement utilisateur (802) est temporairement indisponible pour fournir ledit service de relais UE-vers-réseau ProSe 5G de couche 3, le premier message de rejet d'établissement de liaison directe comprenant une indication d'un deuxième temps auquel le premier équipement utilisateur sera disponible pour fournir ledit service de relais.
